(19) Europäisches Patentamt
European Patent Office
Office européen des brevets

(11) **EP 2 714 453 B1**

(12) **EUROPEAN PATENT SPECIFICATION**

(45) Date of publication and mention
of the grant of the patent:
**01.03.2017 Bulletin 2017/09**

(51) Int Cl.:
**B60K 17/356** *(2006.01)*     **B60K 23/08** *(2006.01)*
**B60K 7/00** *(2006.01)*

(21) Application number: **11726067.9**

(22) Date of filing: **01.06.2011**

(86) International application number:
**PCT/EP2011/002718**

(87) International publication number:
**WO 2012/163375 (06.12.2012 Gazette 2012/49)**

(54) **LOAD CARRYING TRUCK PROVIDED WITH A TRACTION SYSTEM AND A METHOD FOR THE CONTROL OF A TRACTION SYSTEM OF A LOAD CARRYING TRUCK**

LASTKRAFTWAGEN MIT EINEM ANTRIEBSSYSTEM UND VERFAHREN ZUM STEUERN EINES ANTRIEBSSYSTEMS EINES LASTKRAFTWAGENS

CAMION AVEC UN SYSTEME DE PROPULSION ET PROCEDE DE COMMANDE D'UN SYSTEME DE PROPULSION D'UN CAMION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.04.2014 Bulletin 2014/15**

(73) Proprietor: **Volvo Lastvagnar AB**
**405 08 Göteborg (SE)**

(72) Inventors:
• **LARSSON, Lena**
**SE-426 74 Västra Frölunda (SE)**
• **ÖBERG, Jan**
**S-417 29 Göteborg (SE)**
• **JOHANSSON, Alfred**
**SE-414 56 Göteborg (SE)**
• **ALM, Filip**
**S-445 36 Bohus (SE)**

(74) Representative: **Volvo Technology Corporation**
**Volvo Corporate Intellectual Property**
**BF14100, M1.7**
**405 08 Göteborg (SE)**

(56) References cited:
**EP-A2- 0 864 482        DE-U1-202005 016 404**
**US-A- 5 564 519          US-A1- 2002 027 025**
**US-A1- 2006 197 375**

• **-: "Chapter "Antriebsschlupfregelung für NKW""; "-" In: -: "Kraftfahrtechnisches Taschenbuch", 31 December 1991 (1991-12-31), Robert Bosch GmbH, 70442 Stuttgart (DE), XP002669641, ISBN: 3-18-419114-1 vol. 21, pages 558-559, page 558 - page 559**

**Description**

TECHNICAL FIELD OF THE INVENTION

The invention relates to systems and methods for drive train control for vehicles. The invention is particularly directed to the feature of controlling a complementary propulsion unit for a load carrying truck.

BACKGROUND OF THE INVENTION

For load carrying trucks, it is known that there is sometimes a desire for providing driving force on several wheel pairs such that the vehicle for example is provided with a driving force on a rear pair of wheels as well as on front pair of wheels. In many cases, it is desirable to be able to control the traction of the vehicle such that one or several wheel pairs may be connected or disconnected from the power source depending on the traction force demand. The propulsion unit may be the same for all the driving wheels or be a combination of different power sources, e.g. a vehicle provided with a mechanical drivetrain connected to an internal combustion engine and a hydraulic power source connected to hydraulic motors. A vehicle provided with such a combination of mechanical drivetrain and hydraulic motors is for example disclosed in EP 1 886 861.

Even though the known vehicles provided with traction forces on both rear wheels and front wheels provide an improved traction of the vehicles than those vehicles provided with traction on only rear or front wheels, there is still a desire for a further improved traction of a load carrying truck.

US2002/0027025, showing the features of the preamble of claim 1, describes a steering-wheel revolution number correction system for an all-wheel drive vehicle. The all-wheel drive vehicle has a rear wheel driven by an output of the engine transmitted through a transmission, a hydraulic pump receiving the output of the engine and a hydraulic motor rotated by the delivery oil from the hydraulic pump to drive the front wheel. The hydraulic system described in this document comprises a flow switching valve which has throttles on each side of the respective branched flow paths.

DESCRIPTION OF THE INVENTION

An object of the invention is to provide a system which improves the functionality of a load carrying truck provided with traction on both rear wheels and front wheels. The invention is particularly directed to a load carrying vehicle which is provided with a mechanical drive train for traction of a pair of rear wheels and a hydraulic propulsion system for traction of another pair of wheels, preferably a pair of front wheels. The load carrying truck is advantageously of a heavy load carrying kind and is particularly useful for trucks which in their duty frequently is used in rough conditions, e.g. timber loading trucks which may be used on small provisional roads or tracks in the forest where the path may be loose or muddy and additional traction force is desired.

A load carrying truck of the kind described above shall thus preferably be adapted to run smoothly on normal roads at a relatively high velocity, e.g. up to 90 km/h, while also assure traction at low speeds on unpaved, provisional roads. In order to function in a desirable way under different conditions as exemplified above, the complementary drive, i.e. the hydraulically propelled front wheels, shall be able to be disconnected when driving at high speeds and being able to provide an additional traction force when desired, normally at relatively low speeds. In general, there is no need for using the complementary hydraulic propulsion units above 30 km/h eventhough it may be advantageous to use them sometimes up to 50 km/h.

The load carrying truck may be provided with one or several rear axles whereof at least one axle is drivingly connected by a mechanical drivetrain to an internal combustion engine. The mechanically driven rear axles are usually provided with a differential function and the mechanical drivetrain connecting the internal combustion engine with the driven axles is normally connected via a stepped gearbox.

The load carrying truck may also have one or several front axles provided with steerable wheels whereof at least one pair of wheels have been provided with a hydraulic motor each. The motors may for example be hub motors rotating with the wheels and thus having a rotating housing. The hydraulic motors are in general preferred to be able to be decoupled such that the hydraulic traction only is used when desired, e.g. at low speeds on loose or muddy ground. The hydraulic motors may have a variable or fixed displacement.

The hydraulic motors forms part of a hydraulic system and are powered by a hydraulic pump. The hydraulic pump is preferably a pump having a variable displacement which can be controlled to deliver the hydraulic liquid at a desired flow rate or pressure. The pump is most likely driven by the same internal combustion engine which is used as a power source for the mechanical drive of the rear wheels and may be connected to a Power Take-Off (PTO) on the engine.

A general problem with the above kind of traction systems is that there is normally a relatively small space for mounting of the auxiliary hydraulic propulsion system and there is a rather limited space available for flow control elements in order to be able to use a sophisticated control system. The hydraulic systems used so far has therefore been set to a fixed ratio related to the speed of the mechanical drive train or the engine speed. To include a control system for a hydraulic drive which may deliver a specific torque to each wheel should take into account steering wheel angle and wheel base of the vehicle in order to provide the right torque from the hydraulic motors.

The present system is based on insights that certain control parameters may be neglected if the hydraulic system is adapted to fit in on a mechanically driven load carrying truck while the system at the same time may be controlled sufficiently well. Hence, the present system provides a control system for the hydraulic drive which is better adapted to efficient traction from the hydraulic front wheels at low speeds and sharp turnings than those system present today which essentially only delivers a speed which is directly proportional to therear wheel speed. The present hydraulic system thus presents a compact design which may easily fit on an ordinary load carrying truck.

In order to design a hydraulic traction system being rather easy to fit in on a truck while also providing an efficient traction is it suggested that the system comprises a control unit connected to the hydraulic pump. The control unit is programmed to send output signals in order to control the work of the hydraulic pump such that a controlled pressure and/or flow is delivered from the hydraulic pump to the hydraulic wheel motors. In order to control the hydraulic motors is the control unit provided with relevant input data. At least one first input signal indicating a rotational speed of at least a rear wheel is used together with a second input signal indicating a steering angle of the second pair of traction wheels, i.e. the hydraulically driven steerable front wheels. These input signals are used by the control unit in an algorithm in order to compute an output signal which will control the work of the pump to deliver a desired hydraulic flow or pressure.

The first input signal, which indicates the rotational speed of at least one rear wheel, may be a mean rotational speed of said first pair of rear wheels (the wheels of the driven axle) and the control unit can be programmed to use this mean value in the algorithm for computing of the output signals for control of the hydraulic pump. In case the truck is provided with several rear wheel axles, and there are sensors for indicating the rotational speed of wheel pairs located on different axles, may the control unit be programmed to receive or calculate a mean rotational speed based on the rotational speeds of several pairs of rear wheels to be used for computing of said output signals for control of the hydraulic pump. The speed of the rear wheels may for example be measured by using a speed sensor on the outgoing shaft from the gearbox. A sensor placed on the shaft from the gearbox have the advantage of being located in a protected location, an important feature considering the vehicles provided with the hydraulic motors is often intended to be used under rough conditions in terrain where sensors and wires located on the vehicle may be damaged from bushes and/or stones in the path to be travelled by the vehicle.

The second input signal, which indicates the steering angle of the second pair of traction wheels (i.e., the hydraulically powered front wheels), could be a mean steering angle value of these wheels to be used in the algorithm for computing output signals in order to control the work of the hydraulic pump. In case it is not of interest to know the exact steering angle for each individual wheel it may be easy to use a steering column sensor or other sensors which not need to be located at the wheels to register the steering angle which makes the sensor system more compact and easy to install.

In case the vehicle is provided with a second driven steerable front axle could the control unit be programmed to use a mean steering angle value of the pair of steerable wheels on that axle to control the mean wheel speed of the wheels of the axle. The same system is to be used if a further steerable driven axel is placed on any other position on the truck like a tag axle or a pusher axle. The mean steering angle of that axle is used to control the mean speed of the driven wheel of that axle.

A suitable value of this mean angle is the wheel angle of a steering wheel in the centre of the truck between the two steered wheels having no side slip during turning. Because of the mechanical steering gear the wheel angles of the steered wheels are not completely accurate always inducing a small sideslip on the steered wheels when turning. To use a mean angle of the both front wheels is in general sufficient to achieve a satisfactory input for the control of the traction system and a considerably improved functionality of the system compared to no steering angle input at all. It is further better to use a more accurate estimate of this angle of centered wheel with no side slip. This better estimate can be found based the geometry and flexibility of the steering gear and estimated slip of each front wheel. The skilled person in the art is aware of how to perform the geometrical calculations.

The above described control algorithm using a mean value of the steering angle is particularly useful in a hydraulic system wherein the hydraulic pump is connected to the respective hydraulic wheel motors in parallel. By using a parallel system may the hydraulic pressure in each one of the hydraulic wheel motors be in direct communication with each other. This feature has the advantage that the traction power will automatically be divided between both wheels of an axle if there is a hydraulic motor associated with each wheel on an axle. If the truck is turning, the flow will be divided such that the outer wheel will roll faster than the inner wheel since the pressure will be divided equally. This also means that there will be essentially no differentiated traction force between the inner and outer wheel and thus no or a reduced wear of the tire or axles due to mismatch in calculations of the actual desired speed difference between a pair of traction wheels. However, the speed of the hydraulically driven wheels must match the speed of the mechanically driven wheels of the rear axle. It is in general easier to match the speed of the front wheels with a speed of the rear wheels than matching the speed of the front wheels with each other. This configuration of the hydraulic system will thus allow the system to be easier to control while still performing an efficient traction of the vehicle. The hydraulic system for delivering the hydraulic fluid to the respective motors may thus advantageously be designed to always deliver the same pressure to both the hydraulic wheel motors. Hence, it will be possible to construct a less complicated system with less parts needed which also may have the benefits of reducing costs for the system, easy to install on a truck, having less potential leakage points and being durable.

The traction force of the front wheels may be controlled such that the front wheels will have an over speed compared to the rear wheels when the vehicle turns. This will improve the turning radius of the truck, the turning radius being the diameter of a 180 degrees turn. The turning radius may be reduced by 10 percent compared to a vehicle without any front wheel traction and by 35 percent compared to a vehicle provided with front wheel traction where the front wheels are controlled to roll at the same speed as the rear wheels. In addition to an improved turning radius for a front- and rear wheel traction vehicle will there also be a reduced fuel consumption due to less rolling resistance of the wheels since the speeds of the traction wheels are better adapted to the actual speed of the wheels.

The relation between the speed of the front wheels and rear wheels may be estimated to

$$V_f/V_r = 1/(\cos \alpha) \qquad \text{(Equation 1)}$$

wherein

$V_f$ = front wheel mean speed
$V_r$ = rear wheel mean speed
$\alpha$ = steering angle

The front wheel mean speed may for example be estimated from the controlled pump flow and the rear wheel speed may be measured on the propeller shaft, e.g. the outgoing shaft from the gearbox. The above equation is a simplified model for the desired relation between the front- and rear wheel speeds. To adapt a control algorithm may a parameter K be added to the equation such that the equation will be

$$V_f/V_r = K/(\cos \alpha) \qquad \text{(Equation 2)}$$

wherein

K = compensation parameter

K is intended to be a parameter used to change or control how "aggressive" the relationship between the front- and rear wheel speed shall be, i.e. how large the set speed difference shall be between the front- and rear traction wheels. The parameter K may be controlled in dependence of speed, surface friction of the front wheels, front axle (or boogie) pressure and steering angle. The parameter K may be controlled to be reduced if surface friction is reduced, speed is increased, front axle pressure is reduced or a spin situation is detected or probable on the front wheels. K may be increased if there is detected a slip on the rear wheels. The parameter K may also be used for compensation of discrepancies in the estimated value of the exact steering angle value of the front wheels and may also be used for compensation of leakage and friction losses of the hydraulic transmission system such that actual value of the flow from the pump is set somewhat higher than the theoretical value of the desired flow.

The parameter K has been used in the equation above to multiply the quote between the speeds of the front and rear wheels. However, it is not necessary that K is used to multiply with the quote between the speeds of the front and rear wheels. K may also be used as an added term in the equation which may be used for example in order to compensate for deviations from the theoretically correct speed difference and the equation will thus be

$$V_f/V_r = K + 1/(\cos \alpha) \qquad \text{(Equation 3)}$$

Still an alternative equation which may be used for the relation between the front wheel speed and the rear wheel speed is

$$V_f = K + V_r/(\cos \alpha) \qquad \text{(Equation 4)}$$

Depending on the specific control situations may any of the above equations 2 to 4, including the compensation parameter, be used in order to compensate for deviations from the geometrically correct speed of the front wheels as a function of the steering angle and/or to control the front wheels to have an over speed in relation to the rear wheels. It is also of course possible to use a combination of the above corrections and add a coefficient $K_1$ (as in equation 3 or 4) while multiplying with another term $K_2$ (as in equation 2). Hence, the equation for calculating the desired relationship between the front and rear wheel speeds could for example be

$$V_f/V_r = K_1 + K_2/(\cos \alpha) \qquad \text{(Equation 5)}$$

In order to provide an efficient traction of the vehicle and a hydraulic system which can be easily controlled may the hydraulic pump have variable displacement. In this case may the pump volume thus be easily changed to deliver the desired flow of hydraulic liquid to the motors. The hydraulic motor may thus be controlled independently of the internal combustion engine and is not restricted to deliver a flow directly proportional to the engine speed or the speed of an output shaft of a gearbox of the mechanical powertrain.

The flow from the hydraulic pump may further be controlled by the control unit, e.g. an Electronic Control Unit (ECU), such that the displacement volume and the rotational speed of the hydraulic pump provides a flow corresponding to the calculated, desired value when turning. The ECU may further be connected to sensors for indication of a slip condition and/or spin condition of the rear driven wheels. By "slip condition" is meant that a wheel is rotating slower than the rotational speed of the wheel corresponding to the actual speed of the vehicle, e.g. a condition that is likely to happen when breaking or travelling slowly downwards on loose or muddy roads. By "spin condition" condition" is meant that a wheel is rotating faster than the rotational speed of the wheel corresponding to the actual speed of the vehicle, e.g. a condition likely to occur when starting or accelerating on slippery ground or stuck in sand or mud. The hydraulically powered front wheels may thus be controlled to slow down the speed if a slip is detected on the rear wheels and/or to increase the wheel speed on the front wheels if a spinning condition is detected on the rear wheels in order to aid in correcting the travelling speed of the vehicle to the output wheel speed of the traction wheels.

As already mentioned is a suitable design of the hydraulic traction system a system which uses hydraulic wheel motors arranged in parallel. However, such a system could be very sensitive if there is a loss of traction of one of the wheels. Unlimited rotation of one wheel will make the pressure drop for the motors connected in parallel and thus a risk of losing traction on all hydraulically powered wheels. Loss of traction of all hydraulically powered wheels may be prevented by including valves or flow restrictors for all wheels and stop the flow to a wheel which slips. However, the inclusion of such features in the hydraulic system may be costly and also hard to fit on a truck with a main mechanical rear wheel traction. Another way of solving the wheel slip problem could be to perform a braking operation on the wheel which slips. The traction system may.thus also include a pair of brakes and a pair of wheel speed sensors connected to each one of the hydraulically powered front wheels.

The brakes shall be able to be individually controlled independently of each other. The wheel speed sensors are connected to an input port of the control unit and the brakes are connected to an output port of the control unit in order to be controlled in dependence of the wheel speed. The control unit will send a signal to activate the brake on a wheel when a sensed wheel speed is defined as a slipping or spinning condition of the wheel. A slipping or spinning condition could for example be defined for the hydraulically powered front wheel when the speed of such a wheel is differing above a certain limit compared to a rear wheel speed, the vehicle ground speed or the speed of the other wheel of a wheel pair. These speeds, when compared with each other, could of course also include correction factors for turning of the vehicle such that the actual desired wheel speed, or wheel speed range, is estimated based on the steering angle. The pressure may thus be maintained by the increased rolling resistance added to a wheel which spins by activating a wheel brake and the traction from the other hydraulically powered wheels connected in parallel will continue. If the problem with restricting the wheel speed may be solved by using brakes, there is neither any necessity for dividing or restricting the flow during ordinary use of the hydraulic traction system provided the flow from the pump may be regulated and controlled. This may for example be achieved by controlling a variable displacement pump to provide the desired flow or pressure. Hence, the use of a controlled braking operation of the hydraulically driven wheels together with a parallel system for the hydraulic motors and a controlled flow from the pump, e.g. by the use of a variable displacement pump, make it possible to design a hydraulic system which may be controlled efficiently without the need of adding flow dividers or restrictors in the system while managing ordinary drive as well as the occurrence of a slip of the wheels without losing traction. To reduce the number of flow restrictors, valves or flow dividers in the hydraulic system will also reduce friction losses in the hydraulic circuit since the inclusion of these elements always increases internal losses of a hydraulic system. Still another advantage with this system is that the ordinary service brakes of a truck may be used to retard a wheel at wheel slip and no further components must be added to the truck but only include the brakes in the traction control system.

In the description above, it has been assumed that the steerable and hydraulically driven pair of wheels are front wheels. However, it is possible to equip another pair of wheels with the hydraulic motors, e.g. a rear pair of steerable wheels, instead of or in addition to the steerable front wheels. The theoretical reasoning concerning how to control the hydraulic system and the traction of the wheels should also apply in this case even though some of the above mentioned benefits not will be present or as evident as if the motors are applied on a pair of front wheels.

BRIEF DESCRIPTION OF THE DRAWINGS

Fig. 1 Describes a schematic view of a heavy load carrying vehicle provided with an auxiliary hydraulic traction on the front wheels

Fig. 2 Describes a schematic figure of an axial cross sectional view of a hydraulic motor

DETAILED DESCRIPTION OF THE DRAWINGS

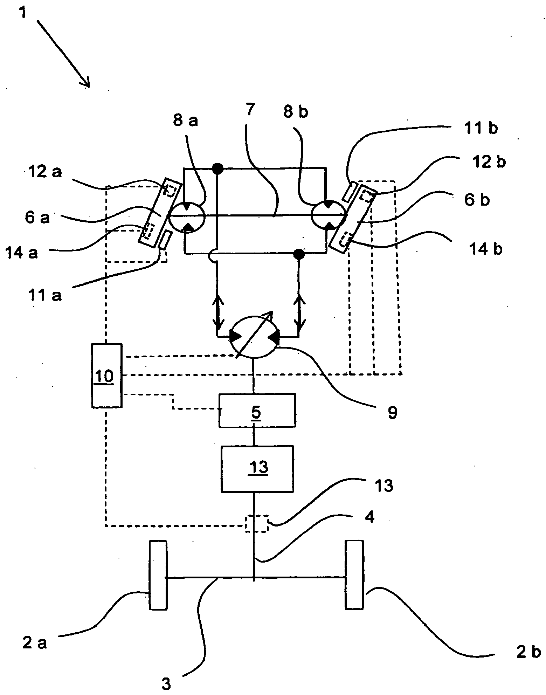

In figure 1 is shown a schematic view of a load carrying truck 1 provided with a traction system. The truck 1 comprises a first pair of traction wheels 2a, 2b on a rear drive axle 3. The axle 3 is connected to an Internal Combustion Engine (ICE) 5 via a mechanical drivetrain 4 comprising a gearbox 13. The truck further comprises a second pair of traction wheels 6a, 6b mounted on a front axle 7. Each one of these two wheels 6a, 6b is provided with a hydraulic motor 8a, 8b which are connected to a hydraulic circuit comprising a hydraulic pump 9. The pump 9 is preferably a reversible variable displacement pump. The pump is controlled by an Electronic Control Unit (ECU) 10 which also is connected to a pair of front wheel brakes 11a, 11b for control of their braking operation. The ECU 10 is further connected to several different kind of sensors such as front wheel speed sensors 12a, 12b and for detection of the individual speed of each one of the second pair of traction wheels 6a, 6b. The ECU 10 is further connected to steering angle sensors 14a, 14b for detection of the steering angle of the second pair of traction wheels 6a, 6b. The ECU 10 is further connected to a rotational speed sensor 15 located on the output shaft from the gearbox 13 connected to the rear drive axle 3.

In the above described embodiment is the traction system exemplified for a load carrying truck provided with a single pair of rear wheels and a single pair of front wheels. However, there may be multiple rear wheel pairs as well as multiple front wheel pairs of the load carrying truck Hence, there may be an additional front axle with hydraulically driven wheel pairs as well as an additional mechanically driven rear axle. There may be further hydraulically driven rear wheel pairs on tag axles or pusher axles of the load carrying truck.

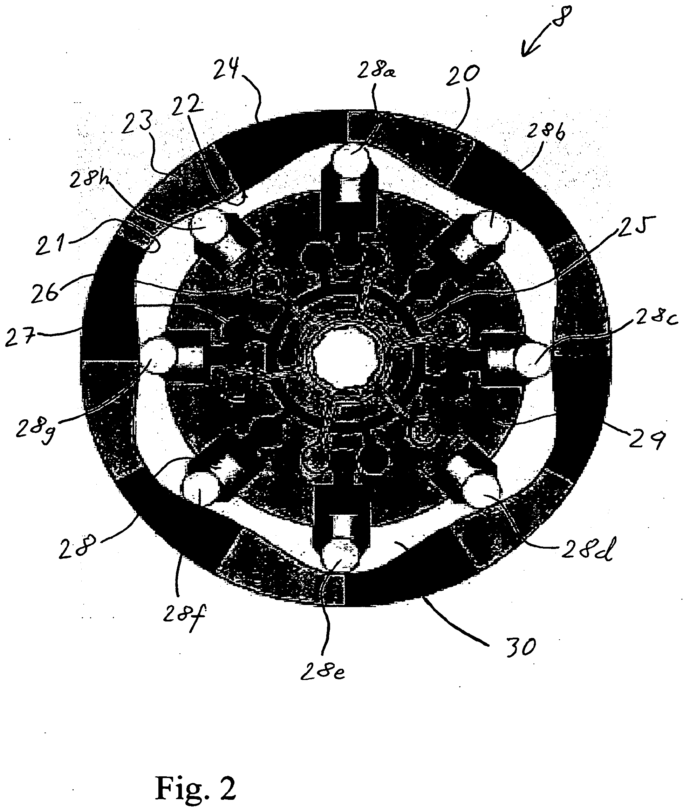

In fig 2 is shown a schematic figure of an axial cross sectional view of a hydraulic motor 8 suitable for the system disclosed in figure 1. The hydraulic motor 8 comprises an outer cam ring 20 having an essentially hexagonic shape provided with rounded edges 21 and rounded, inwardly raised portions 22 in between the edges 21. The cam ring 20 is rotating with a wheel connected to the hydraulic motor 8. The cam ring 20 is further divided in direction fields 23, 24 which are defined by the peak of the raised portions 22 and the edges 21. A direction field 23 which extends from an edge 21 to a peak of the raised portion 22 in the clockwise direction corresponds to a clockwise rotational field 23 and such a field 23 will be thus be referred to as a forward rotational field hereinafter. A direction field 24 which extends from an edge 21 to a peak of the raised portion 22 in the counterclockwise direction corresponds to a counterclockwise rotational field 24 and such a field will be thus be referred to as a reverse rotational field 24 hereinafter. The hydraulic motor further includes a central distributor plate 25 also rotating with the wheel and provided with forward channels 26 and reverse channels 27. The channels 26, 27 have 6 openings each which are adapted to fit in and connect hydraulically with hydraulic pistons 28, in this case eight pistons, which are located symmetrically around the rotational centre of the motor 8 on a fixed cylinder block 29. The forward and reverse channels 26, 27 are designed such that the forward channels 26 are located in the same circle sectors as the forward rotational fields 23 of the cam ring 20 and the reverse channels 27 are located in the came circle sectors as the reverse rotational fields 24 for delivering hydraulic liquid to the pistons 28. When either the forward channel 26 or the reverse channel 27 is pressurized, the camring 20 and a wheel attached thereto will move correspondingly to provide a forward motion or a reverse motion of a vehicle. In the figure, it is shown that two pistons 28 d, h (upper left and lower right pistons) are fitted with and hydraulically connected with openings of the forward channel 26 and ready to receive pressurized hydraulic liquid from the hydraulic system. If the hydraulic liquid in the forward channel 26 is pressurized, the upper left piston 28g and the lower right piston 28d will be pushed outwards and cause a clockwise (forward) motion of the cam ring 20 and a wheel attached to the cam ring 20. As the cam ring 20 and the distributor plate 25 rotates, the connection between the pressurized pistons 28 d, g (upper left and lower right pistons) will be disconnected and depressurized such that the pistons 28 d, h may easily be returned into the fixed cylinder block 29. While the cam ring 20 is moving in the forward direction, the left piston 28f and right piston 28c will become hydraulically connected to the forward channel 26 and these pistons 28c, f will be pushed outwards and provide for a continuing forward motion of the camring 20. This procedure will thus continue for the cylinders 28 until the forward channel 26 is depressurized. If a reverse motion is desired instead, the reverse channel 27 is pressurized instead and a reverse motion of the cam ring 20 and an attached wheel is achieved. In order to decouple the hydraulic engine, the space between the cam ring 20 and the cylinder block 29, usually the space in the hydraulic motor defined by a motor housing, could be pressurized such that the pistons will be pushed into the cylinder block 29 and a wheel connected to the hydraulic motor 8 may rotate more or less freely. Hence, the hydraulic motors may be decoupled in an efficient way such that there are small losses due to additional friction from the hydraulic motor when decoupled. Since the hydraulic engines usually not are intended to be used for propulsion of the load carrying truck when travelling above 30 km/h on a road or highway, it is important that the mounting of the hydraulic motors to the vehicle not will contribute with a significant additional rolling resistance when decoupled.

Even though it is exemplified above to have six cams on the cam ring, the number of cams could be different, e.g 9 or 10. Likewise, the number of pistons needs not to be 8 but could be 10 or 12 for example.

## Claims

1. A load carrying truck (1) provided with a traction system wherein said system comprises

    - at least a first pair of traction wheels (2a, 2b) mounted on a rear drive axle (3) being drivingly connected by a mechanical drivetrain (4) to an internal combustion engine (5)
    - a second pair of steerable traction wheels (6a, 6b) mounted on an axle (7) and being hydraulically powered by a pair of hydraulic motors (8a, 8b), each one located at each wheel of said second pair of traction wheels (6a, 6b)
    - a hydraulic circuit comprising a hydraulic pump (9) powered by the internal combustion engine (5) and arranged to drive said hydraulic motors (8a, 8b),

    wherein said traction system further comprises a control unit (10) connected to the hydraulic pump (9) and adapted to send output signals in order to control the work of the hydraulic pump (9), and thus the pressure and/or flow delivered from the hydraulic pump (9) to the hydraulic wheel motors (8a, 8b), said control unit (10) using an algorithm to compute said output signals in dependence of at least one first input signal indicating a rotational speed of at least a rear wheel (2a, 2b) and a second input signal received by said control unit (10) indicating a steering angle of said second pair of traction wheels (6a, 6b) provided with the hydraulic motors (8a, 8b), **characterized in that** said hydraulic pump (9)is hydraulically connected to the respective hydraulic wheel motors (8a,8b) in parallel such that the hydraulic pressure in each one of the wheel motors (8a, 8b) is in direct communication with each other.

2. A load carrying truck (1) according to claim 1 **characterized in that** the control unit (10) is programmed to use a mean steering angle value of said second pair of traction wheels (6a, 6b) in the algorithm for computing output signals in order to control the work of the hydraulic pump (9).

3. A load carrying truck (1) according to claim 1 **characterized in that** the truck (1) is provided with further steerable front wheels and the control unit (10) is adapted to use a mean steering angle value of several pairs of steerable wheels in the algorithm for computing output signals in order to control the work of the hydraulic pump (9).

4. A load carrying truck (1) according to claim 1 **characterized in that** said hydraulic pump (9) has a variable displacement.

5. A load carrying truck (1) according to claim 4 **characterized in that** said hydraulic pump (9) is connected to a Power Take-Off of the engine (5).

6. A load carrying truck (1) according to any previous claim **characterized in that** said hydraulic system for delivering the hydraulic fluid to the respective motors (8a, 8b) is designed to always deliver the same pressure to both the hydraulic wheel motors (8a, 8b).

7. A load carrying truck (1) according to any previous claim **characterized in that** said truck is further provided with a pair of brakes (11a, 11b) connected to each one of the hydraulically powered second pair of wheels (6a, 6b) and a pair of wheel speed sensors (12a, 12b) connected to each wheel of the second pair of wheels (6a, 6b), said brakes (11a, 11b) being able to be individually controlled independently of each other and controlled by the control unit (10) to provide a braking force in response to a sensed wheel speed defined as a slipping condition of said wheel.

8. A load carrying truck (1) according to any previous claim **characterized in that** said control unit (10) is programmed to use a mean rotational speed of said first pair of rear wheels (2a, 2b) in the algorithm for computing of said output signals for control of the hydraulic pump (9).

9. A load carrying truck (1) according to claim 8 **characterized in that** the truck (1) is provided with several rear wheel axles, said truck (1) provided with sensors for indicating the rotational speed of wheel pairs located on different axles, said control unit further programmed to receive or calculate a mean rotational speed, based on the rotational speeds from several pairs of rear wheels, to be used for computing of said output signals for control of the hydraulic pump.

10. A load carrying truck (1) according to any previous claim **characterized in that** said second pair of wheels (6a, 6b) are mounted on a front axle (7).

**Patentansprüche**

1. Lasttragender Lastwagen (1), der mit einem Traktionssystem versehen ist, wobei das System umfasst

   - wenigstens ein erstes Paar von Traktionsrädern (2a, 2b), die an einer Hinterantriebsachse (3) montiert sind, die durch einen mechanischen Antriebsstrang (4) mit einem Verbrennungsmotor (5) antriebsverbunden ist,
   - ein zweites Paar von lenkbaren Traktionsrädern (6a, 6b), die an einer Achse (7) montiert sind und durch ein Paar von Hydraulikmotoren (8a, 8b) hydraulisch angetrieben werden, wobei jeder an einem Rad des zweiten Paars von Traktionsrädern (6a, 6b) angeordnet ist,
   - einen Hydraulikkreis umfassend eine Hydraulikpumpe (9), die durch den Verbrennungsmotor (5) angetrieben wird und so angeordnet ist, dass sie die Hydraulikmotoren (8a, 8b) antreibt, wobei das Traktionssystem ferner eine Steuereinheit (10) umfasst, die mit der Hydraulikpumpe (9) verbunden ist und daran angepasst ist, Ausgangssignale zu senden, um die Arbeit der Hydraulikpumpe (9), und somit den Druck und/oder Strom zu steuern, der von der Hydraulikpumpe (9) an die Hydraulikradmotoren (8a, 8b) abgegeben wird, wobei die Steuereinheit (10) einen Algorithmus verwendet, um die Ausgangssignale in Abhängigkeit von wenigstens einem ersten Eingangssignal, das eine Drehzahl von wenigstens einem Hinterrad (2a, 2b) anzeigt, und einem von der Steuereinheit (10) empfangenen zweiten Eingangssignal zu berechnen, das einen Lenkwinkel des zweiten Paars der mit den Hydraulikmotoren (8a, 8b) versehenen Traktionsräder (6a, 6b) anzeigt, **dadurch gekennzeichnet, dass** die Hydraulikpumpe (9) mit den jeweiligen Hydraulikradmotoren (8a, 8b) derart parallel hydraulisch verbunden ist, dass der Hydraulikdruck in jedem der Radmotoren (8a, 8b) in direkter Kommunikation miteinander steht.

2. Lasttragender Lastwagen (1) nach Anspruch 1, **dadurch gekennzeichnet, dass** die Steuereinheit (10) dafür programmiert ist, einen mittleren Lenkwinkelwert des zweiten Paars von Traktionsrädern (6a, 6b) in dem Algorithmus zum Berechnen von Ausgangssignalen zu verwenden, um die Arbeit der Hydraulikpumpe (9) zu steuern.

3. Lasttragender Lastwagen (1) nach Anspruch 1, **dadurch gekennzeichnet, dass** der Lastwagen (1) mit weiteren lenkbaren Vorderrädern versehen ist und die Steuereinheit (1) daran angepasst ist, einen mittleren Lenkwinkelwert von einigen Paaren von lenkbaren Rädern in dem Algorithmus zum Berechnen von Ausgangssignalen zu verwenden, um die Arbeit der Hydraulikpumpe (9) zu steuern.

4. Lasttragender Lastwagen (1) nach einem vorhergehenden Anspruch, **dadurch gekennzeichnet, dass** die Hydraulikpumpe (9) eine variable Verdrängung aufweist.

5. Lasttragender Lastwagen (1) nach Anspruch 4, **dadurch gekennzeichnet, dass** die Hydraulikpumpe (9) mit einem Nebenabtrieb des Motors (5) verbunden ist.

6. Lasttragender Lastwagen (1) nach einem vorhergehenden Anspruch, **dadurch gekennzeichnet, dass** das Hydrauliksystem zum Abgeben des Hydraulikfluids an die jeweiligen Motoren (8a, 8b) dazu ausgelegt ist, immer den gleichen Druck an beide Hydraulikradmotoren (8a, 8b) abzugeben.

**7.** Lasttragender Lastwagen (1) nach einem vorhergehenden Anspruch, **dadurch gekennzeichnet, dass** der Lastwagen ferner mit einem Paar von Bremsen (11 a, 11 b), die mit jedem des hydraulisch angetriebenen zweiten Paars von Rädern (6a, 6b) verbunden sind, und einem Paar von Radgeschwindigkeitssensoren (12a, 12b) versehen ist, die mit jedem Rad des zweiten Paars von Rädern (6a, 6b) verbunden sind, wobei die Bremsen (11 a, 11 b) individuell unabhängig voneinander gesteuert und von der Steuereinheit (10) so gesteuert werden können, dass sie eine Bremskraft in Ansprechung auf eine erfasste Radgeschwindigkeit bereitstellen, die als ein Rutschzustand des Rads definiert ist.

**8.** Lasttragender Lastwagen (1) nach einem vorhergehenden Anspruch, **dadurch gekennzeichnet, dass** die Steuereinheit (10) dafür programmiert ist, eine mittlere Drehzahl des ersten Paars von Hinterrädern (2a, 2b) in dem Algorithmus zum Berechnen der Ausgangssignale zur Steuerung der Hydraulikpumpe (9) zu verwenden.

**9.** Lasttragender Lastwagen (1) nach Anspruch 8, **dadurch gekennzeichnet, dass** der Lastwagen (1) mit einigen Hinterradachsen versehen ist, wobei der Lastwagen (1) mit Sensoren zum Anzeigen der Drehzahl der auf unterschiedlichen Achsen befindlichen Radpaare versehen ist, wobei die Steuereinheit ferner dazu programmiert ist, eine mittlere Drehzahl basierend auf den Drehzahlen von einigen Paaren von Hinterrädern zu empfangen oder zu berechnen, um sie zum Berechnen der Ausgangssignale zur Steuerung der Hydraulikpumpe zu verwenden.

**10.** Lasttragender Lastwagen (1) nach einem vorhergehenden Anspruch, **dadurch gekennzeichnet, dass** das zweite Paar von Rädern (6a, 6b) an einer Vorderachse (7) montiert ist.

**Revendications**

**1.** Camion poids lourd (1) muni d'un système de traction où ledit système comprend

- au moins une première paire de roues de traction (2a, 2b) montées sur un essieu moteur arrière (3) étant relié par entraînement par une chaîne cinématique mécanique (4) à un moteur à combustion interne (5)
- une deuxième paire de roues de traction orientables (6a, 6b) montées sur un essieu (7) et étant hydrauliquement alimentées par une paire de moteurs hydrauliques (8a, 8b), chacun étant situé au niveau de chaque roue de ladite deuxième paire de roues de traction (6a, 6b)
- un circuit hydraulique comprenant une pompe hydraulique (9) alimentée par le moteur à combustion interne (5) et agencée pour entraîner lesdits moteurs hydrauliques (8a, 8b), où ledit système de traction comprend en outre une unité de commande (10) reliée à la pompe hydraulique (9) et adaptée pour envoyer des signaux de sortie afin de commander le travail de la pompe hydraulique (9), et ainsi la pression et/ou le débit fourni(e) par la pompe hydraulique (9) aux moteurs de roue hydrauliques (8a, 8b), ladite unité de commande (10) utilisant un algorithme pour calculer lesdits signaux de sortie en fonction d'au moins un premier signal d'entrée indiquant une vitesse de rotation d'au moins une roue arrière (2a, 2b) et un deuxième signal d'entrée reçu par ladite unité de commande (10) indiquant un angle de braquage de ladite deuxième paire de roues de traction (6a, 6b) munies des moteurs hydrauliques (8a, 8b), **caractérisé en ce que** ladite pompe hydraulique (9) est hydrauliquement reliée aux moteurs de roue hydrauliques respectifs (8a, 8b) en parallèle de sorte que les pressions hydrauliques dans chacun des moteurs de roue (8a, 8b) soient en communication directe l'une avec l'autre.

**2.** Camion poids lourd (1) selon la revendication 1
**caractérisé en ce que** l'unité de commande (10) est programmée pour utiliser une valeur d'angle de braquage moyenne de ladite deuxième paire de roues de traction (6a, 6b) dans l'algorithme pour calculer des signaux de sortie afin de commander le travail de la pompe hydraulique (9).

**3.** Camion poids lourd (1) selon la revendication 1
**caractérisé en ce que** le camion (1) est muni de roues avant orientables supplémentaires et l'unité de commande (10) est adaptée pour utiliser une valeur d'angle de braquage moyenne de plusieurs paires de roues orientables dans l'algorithme pour calculer des signaux de sortie afin de commander le travail de la pompe hydraulique (9).

**4.** Camion poids lourd (1) selon l'une des revendications précédentes **caractérisé en ce que** ladite pompe hydraulique (9) a une cylindrée variable.

**5.** Camion poids lourd (1) selon la revendication 4
**caractérisé en ce que** ladite pompe hydraulique (9) est reliée à une prise de force du moteur (5).

**6.** Camion poids lourd (1) selon l'une des revendications précédentes **caractérisé en ce que** ledit système hydraulique pour fournir le fluide hydraulique aux moteurs respectifs (8a, 8b) est conçu pour fournir toujours la même pression aux deux moteurs de roue hydrauliques (8a, 8b).

**7.** Camion poids lourd (1) selon l'une des revendications précédentes **caractérisé en ce que** ledit camion est en outre muni d'une paire de freins (11a, 11 b) reliés à chacune de la deuxième paire de roues (6a, 6b) hydrauliquement alimentées et d'une paire de capteurs de vitesse de roue (12a, 12b) reliés à chaque roue de la deuxième paire de roues (6a, 6b), lesdits freins (11 a, 11 b) étant capables d'être commandés individuellement indépendamment l'un de l'autre et commandés par l'unité de commande (10) pour fournir une force de freinage en réponse à une vitesse de roue détectée définie en tant que condition de glissement de ladite roue.

**8.** Camion poids lourd (1) selon l'une des revendications précédentes **caractérisé en ce que** ladite unité de commande (10) est programmée pour utiliser une vitesse de rotation moyenne de ladite première paire de roues arrière (2a, 2b) dans l'algorithme pour calculer lesdits signaux de sortie pour commander la pompe hydraulique (9).

**9.** Camion poids lourd (1) selon la revendication 8 **caractérisé en ce que** le camion (1) est muni de plusieurs essieux de roue arrière, ledit camion (1) muni de capteurs pour indiquer la vitesse de rotation de paires de roues situées sur différents essieux, ladite unité de commande programmée en outre pour recevoir ou calculer une vitesse de rotation moyenne, sur la base des vitesses de rotation de plusieurs paires de roues arrière, à utiliser pour calculer lesdits signaux de sortie pour commander la pompe hydraulique.

**10.** Camion poids lourd (1) selon l'une des revendications précédentes **caractérisé en ce que** ladite deuxième paire de roues (6a, 6b) est montée sur un essieu avant (7).

Fig. 2

## REFERENCES CITED IN THE DESCRIPTION

**Patent documents cited in the description**

- EP 1886861 A
- US 20020027025 A